# EUROPÄISCHE PATENTANMELDUNG

(11) **EP 1 209 888 A2**
(43) Veröffentlichungstag der Anmeldung: **29.05.2002**
(21) Anmeldenummer: 01440385.1
(22) Anmeldetag: 14.11.2001
(51) Int. Cl.: H04M 7/00

(54) **Rufsignalisierung für aus dem Internet kommende Anrufe**

(30) Priorität: 22.11.2000 DE 10057981
(71) Anmelder: ALCATEL, 75008 Paris (FR)
(72) Erfinder: Kotthaus, Rolf, 71642 Ludwigsburg (DE); Matt, Hans Jürgen, 71686 Remseck (DE)
(74) Vertreter: KOHLER SCHMID + PARTNER

(57) **Zusammenfassung**

Ein Verfahren zum Übermitteln von Signalisierungsinformation über ein IP (=lnternet Protocol)-Netzwerk (4) an einen Endteilnehmer, mittels derer der Endteilnehmer darüber informiert werden kann, dass über das IP-Netzwerk ein Anruf eingeht, der an ein am IP-Netzwerk angeschlossenes IP-Endgerät (5) des Endteilnehmers gerichtet ist, und der insbesondere Video- und/oder Audiosignale, beispielsweise menschliche Sprachsignale übertragen soll, ist dadurch gekennzeichnet, dass die Rufsignalisierung unabhängig vom Internetprotokoll über einen speziellen logischen Übertragungskanal auf einer parallelen oder derselben physischen Verbindungsleitung erfolgt, über welche der Anruf an das IP-Endgerät weitergeleitet wird. Dadurch kann in einfacher Weise ein VolP-Anruf unabhängig davon angenommen werden, ob das IP-Endgerät eingeschaltet bzw. eingeloggt ist oder nicht.

## Beschreibung

Die Erfindung betrifft ein Verfahren zum Übermitteln von Signalisierungsinformation über ein IP (=Internet Protocol)-Netzwerk an einen Endteilnehmer, mittels derer der Endteilnehmer darüber informiert werden kann, dass über das IP-Netzwerk ein Anruf eingeht, der an ein am IP-Netzwerk angeschlossenes IP-Endgerät des Endteilnehmers gerichtet ist, und der insbesondere Video- und/- oder Audiosignale, beispielsweise menschliche Sprachsignale übertragen soll. Weiter betrifft die Erfindung auch Computerprogramme und Vorrichtungen zur Unterstützung und Durchführung eines derartigen Verfahrens, insbesondere geeignete Servereinheiten, Signalisierungseinrichtungen, Prozessorbaugruppen und programmierbare Gate-Array-Baugruppen.

Die Internet-Telefonie verbreitet sich immer mehr, vor allem wegen der niedrigen Gebühren, insbesondere bei interkontinentalen Verbindungen (USA-Japan-Europa-Australien, etc.). Dabei kommunizieren heute vorzugsweise PCs untereinander, die jeweils mit einer Hör-Sprechgarnitur (Kopfhörer mit Mikrofon) betrieben werden.

Der PC codiert mit Hilfe einer Soundblaster-Karte die auszusendende Sprache in ein digitales Signal, das über das Internet zum Partner gesendet wird und decodiert die empfangenen Digitalsignale in analoge Signale zurück, die im Kopfhörer hörbar sind.

Um einen solchen PC im Internet mit einem gewöhnlichen Telefon (POT bzw. ISDN) am PSTN/GSTN verbinden zu können, wird eine PSTN<>IP Überleiteinrichtung (Gateway) zwischen dem klassischen Telefonnetz (PSTN bzw. GSTN) und dem Internet benötigt. Dieses Gateway wird z.Zt. in der G.799 der ITU-T behandelt.

Es zeigt sich aber, dass die hier aufgeführten Spezifikationen und Überlegungen nicht ausreichen für die Herstellung einer Telefonverbindung zwischen einem Telefon am PSTN und einem Endgerät im Internet. Dieselben Probleme treten auch bei einer Übertragung von Videosignalen zur Übermittlung optischer Information zwischen einem Endgerät im Telefonnetz an ein IP-Endgerät im Internet auf.

IP-Endgeräte wie PCs und Laptops können zwar mit einer Hör-Sprechgarnitur zusammengeschaltet werden, um zu telefonieren, aber sie können bei einem eintreffenden Telefonruf aus dem PSTN nur solange dem Teilnehmer ein akustisch-optisches Zeichen signalisieren, solange sie eingeschaltet sind. Wenn sie ausgeschaltet sind, können sie keinen Ruf erkennen und auch nicht dem Teilnehmer signalisieren. Daher kann derzeit eine derartige Telekommunikations-Verbindung nur aufgebaut und eine IP-Nachricht an einem IP-Endgerät empfangen werden, solange das Letztere eingeschaltet bzw. eingeloggt ist.

Aufgabe der vorliegenden Erfindung ist es demgegenüber, ein Verfahren der eingangs beschriebenen Art mit möglichst einfachen Mitteln dahingehend weiterzubilden, dass aus dem Internet kommende Anrufe, mit denen optische und/oder akustische Informationen übermittelt werden sollen (= VolP), auch dann dem gerufenen Endteilnehmer signalisiert werden können, wenn das angerufene IP-Endgerät ausgeschaltet oder ausgeloggt ist.

Erfindungsgemäß wird diese Aufgabe auf ebenso überraschend einfache wie wirkungsvolle Art und Weise dadurch gelöst, dass die Rufsignalisierung unabhängig vom Internet Protocol über einen speziellen logischen Übertragungskanal auf einer parallelen oder auf derselben physischen Verbindungsleitung erfolgt, über welche der Anruf an das IP-Endgerät weitergeleitet wird.

Üblicherweise werden Internet-Daten auf der ISDN-Teilnehmeranschlussleitung zum Telefon übertragen und zwar vorzugsweise auf einem oder zwei B-Kanälen. Bei xdSL-Systemen kann eine ISDN Technik enthalten sein. Eine Signalisierung kann daher immer über z.B. den ISDN-D-Kanal erfolgen.

Ferner können diese Signale über diverse physische Verbindungsleitungen zum Teilnehmer gelangen, wie z.B. über einen "klassischen" Telefon-Klingeldraht, einen Koaxialkabelanschluss, eine drahtlose Anschlusstechnik (WLL = wireless local loop), einen Kabelfernsehanschluss (= CaTV), DECT und dergleichen.

Die Rufsignalisierung kann dann am angerufenen, aber ausgeschalteten IP-Endgerät mittels einer Zusatzeinrichtung detektiert und entweder ein Einschalten bzw. Einloggen desselben bewirken oder über eine entsprechende Zusatzeinrichtung ein optisches oder akustisches Signal an den gerufenen Endteilnehmer weiterleiten, um diesen auf einen eingehenden Anruf aufmerksam zu machen, damit der Endteilnehmer sein IP-Endgerät einschalten kann.

Besonders bevorzugt ist eine Variante des erfindungsgemäßen Verfahrens, bei der als logischer Übertragungskanal für die Rufsignalisierung ein D-Kanal einer ISDN-Verbindung benutzt wird. Das angerufene IP-Endgerät oder eine entsprechende Zusatzeinrichtung registiert dann den eingehenden Anruf und meldet ihn in geeigneter Form dem gerufenen Endteilnehmer.

Vorteilhaft ist auch eine Verfahrensvariante, bei der die Rufsignalisierung durch Senden einer bestimmten Frequenz erfolgt, mit der eine Signalisierungseinrichtung am angerufenen IP-Endgerät aktiviert werden kann.

Vorzugsweise werden nach dem Eingehen der Rufsignalisierung automatisch akustische und/oder optische Signale an den gerufenen Endteilnehmer ausgesendet, um ihn auf den eingehenden Anruf aufmerksam zu machen.

Zusätzlich oder alternativ wird bei einer weiteren bevorzugten Verfahrensvariante nach dem Eingehen der Rufsignalisierung automatisch das IP-Endgerät des gerufenen Endteilnehmers eingeschaltet und/oder eingeloggt. Auf diese Weise kann der eingehende Anruf vom IP-Endgerät tatsächlich entgegengenommen und gegebenenfalls gespeichert werden.

Um dem anrufenden Endteilnehmer eine Rückmeldung über die vorgefundene Situation am angerufenen IP-Endgerät zu ermöglichen, wird bei einer weiteren Variante des erfindungsgemäßen Verfahrens nach dem Eingehen der Rufsignalisierung automatisch der anrufende Endteilnehmer darüber informiert, wenn das angerufene IP-Endgerät aktuell ausgeloggt ist, und/oder gegebenenfalls in Kürze eingeloggt werden wird.

Besonders bevorzugt ist auch eine alternativ oder zusätzlich einsetzbare Verfahrensvariante, die sich dadurch auszeichnet, dass nach dem Eingehen der Rufsignalisierung automatisch eine lokale Mailbox am angerufenen IP-Endgerät und/oder eine an das IP-Netzwerk angeschlossene Mailbox aktiviert wird, wenn das angerufene IP-Endgerät aktuell ausgeloggt oder nicht eingeschaltet ist. Damit können die Vorteile einer Mailbox, wie sie aus dem Bereich der Telefonie seit langem bekannt ist, auch für angerufene IP-Endgeräte ausgenutzt werden.

Bei einer bevorzugten Weiterbildung dieser Verfahrensvariante wird die Mailbox erst nach Ablauf einer, vorzugsweise durch den gerufenen Endteilnehmer vorgebbaren Zeitspanne aktiviert, so dass der gerufene Endteilnehmer, falls er sich in der Nähe des IP-Endgerätes aufhält, Gelegenheit erhält, den eingehenden Anruf direkt anzunehmen.

Vorteilhaft ist auch eine Weiterbildung der oben beschriebenen Verfahrensvarianten, bei der der gerufene Endteilnehmer vorgeben kann, ob im Falle eines an sein IP-Endgerät gerichteten eingehenden Anrufs das IP-Endgerät eingeschaltet und/oder eingeloggt wird, falls es aktuell ausgeschaltet oder ausgeloggt ist, oder ob in diesem Fall eine Mailbox aktiviert werden soll. Auf diese Weise kann der Endteilnehmer während seiner Abwesenheit eingehende Anrufe nach Belieben in die eine oder andere Richtung lenken.

Bei einer besonders bevorzugten Variante des erfindungsgemäßen Verfahrens ist vorgesehen, dass ein Server, der insbesondere entweder an das IP-Netzwerk des angerufenen IP-Endgeräts oder an das Telekommunikations-Netzwerk des anrufenden Endteilnehmers angeschlossen ist, den eingehenden Anruf detektiert und die Rufsignalisierung für den an das IP-Endgerät gerichteten Anruf unabhängig davon initiiert, ob das angerufene IP-Endgerät eingeschaltet bzw. eingeloggt ist. Die Rufsignalisierung kann ähnlich aufgebaut sein wie die bekannte Rufsignalisierung im PSTN. Sie wird dann vom Server über das entsprechende IP-Netzwerk auf einem logischen Kanal der physischen Internet-Verbindung (in der Regel eine Telefonleitung) unabhängig vom Internetprotokoll an das IP-Endgerät des gerufenen Endteilnehmers weitergeleitet. Beim Eintreffen der Rufsignalisierung am IP-Endgerät oder einem entsprechenden Zusatzgerät können dann automatisch die oben beschriebenen Maßnahmen ergriffen werden, falls das angerufene IP-Endgerät ausgeschaltet oder ausgeloggt ist.

In den Rahmen der vorliegenden Erfindung fällt auch eine Servereineit, eine Prozessor-Baugruppe sowie eine Gate-Array-Baugruppe zur Unterstützung des oben beschriebenen erfindungsgemäßen Verfahrens sowie ein Computerprogramm zur Durchführung des Verfahrens. Das Verfahren kann sowohl als Hardwareschaltung, als auch in Form eines Computerprogramms realisiert werden. Heutzutage wird eine Software-Programmierung für leistungsstarke DSP's bevorzugt, da neue Erkenntnisse und Zusatzfunktionen leichter durch eine Veränderung der Software auf bestehender Hardwarebasis implementierbar sind. Verfahren können aber auch als Hardwarebausteine beispielsweise in IP- oder TK-Endgeräten oder herkömmlichen Telefonanlagen implementiert werden.

Erfindungsgemäß ist eine Servereinheit zu Unterstützung des oben beschriebenen Verfahrens, insbesondere ein Netzwerk-Server, mit Mitteln zum Detektieren eines Video- und/oder Audiosignale enthaltenden und an ein IP-Endgerät gerichteten Anrufs sowie mit Mitteln zum Initiieren und Aussenden von Signalinformation an das angerufene IP-Endgerät ausgestattet.

Weiterhin fällt in den Rahmen der vorliegenden Erfindung auch eine Signalisierungseinrichtung zur Unterstützung des erfindungsgemäßen Verfahrens mit Mitteln zum Empfangen von Signalisierungsinformation, die anzeigt, dass ein Anruf, insbesondere mit Video- und/oder Audiosignalen, beispielsweise menschlichen Sprachsignalen, über ein IP-Netzwerk eingeht, der an ein am IP-Netzwerk angeschlossenes IP-Endgerät eines gerufenen Endteilnehmers gerichtet ist, sowie mit Mitteln zur akustischen und/oder optischen Signalisierung des eingehenden Anrufs an den gerufenen Endteilnehmer und/oder mit Mitteln zum Aktivieren einer Mailbox und/oder mit Mitteln zum Einschalten bzw. Einloggen des angerufenen IP-Endgeräts, falls dieses aktuell ausgeschaltet bzw. ausgeloggt ist.

Die erfindungsgemäße Signalisierungseinrichtung kann bei Auführungsformen dadurch modifiziert sein, dass sie eine vom IP-Endgerät unabhängige, separate Energieversorgung aufweist. Dadurch kann die Signalisierungseinrichtung auch dann agieren, wenn das entsprechende IP-Endgerät vollständig von einer Energieversorgung abgekoppelt sein sollte.

Dies kann beispielsweise dadurch realisiert werden, dass die Energieversorgung der Signalisierungseinrichtung eine oder mehrere, vorzugsweise wiederaufladbare Batterien umfasst, oder ein separates Netzteil, das nur den Signalisierungsteil speist, oder eine Fernspeisung der Ruferkennungselektronik aus dem ISDN-Netz.

Alternativ oder zusätzlich kann die Energieversorgung der Signalisierungseinrichtung einen Stromversorgungsanschluss an ein Hochspannungsnetz, beispielsweise das 230V-Versorgungsnetz oder an ein Niederspannungsnetz, beispielsweise an ein Telekommunikationsnetzwerk, insbesondere an ein Telefonnetz, an ein ISDN-NT oder vorzugsweise an das IP-Netzwerk des angerufenen IP-Endgeräts umfassen.

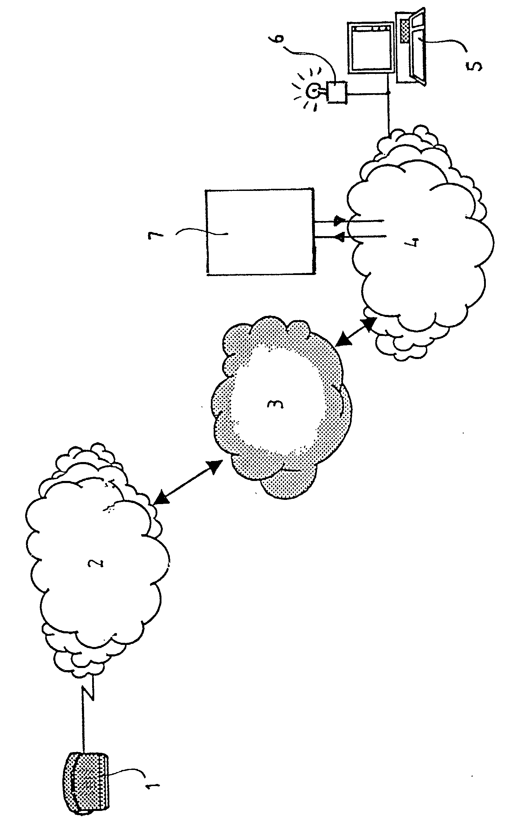

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert.

Die Figur zeigt ein stark schematisiertes Prinzipbild der Funktionsweise einer Telekommunikationsverbindung zur Durchführung des erfindungsgemäßen Verfahrens.

Von einem Endgerät 1, beispielsweise einem "klassischen" Telefon (POT bzw. ISTN) wird über ein klassisches Telefonnetz 2 (PSTN bzw. GSTN = General Switched Telephone Network) ein Anruf an eine Überleiteeinrichtung 3 (= gateway) gereicht. Die Überleiteeinrichtung 3 verbindet das Telefonnetz 2 mit dem Internet 4. An diesem wiederum ist ein IP-Endgerät 5 angeschlossen, an welches der vom Endgerät 1 ausgehende Anruf gerichtet ist. Im vorliegenden Beispiel ist das IP-Endgerät 5 mit einer erfindungsgemäßen Signalisierungseinrichtung 6 verbunden. Außerdem ist im (oder am) Internet 4 ein Netzwerk-Server 7 vorgesehen, der mit in der Zeichnung nicht näher dargestellten Mitteln zum Detektieren eines ankommenden Anrufs sowie mit Mitteln zum Initiieren und Aussenden von Signalisierungsinformation an das angerufene IP-Endgerät 5 ausgestattet ist.

Die Signalisierungseinrichtung 6 wiederum ist mit ebenfalls nicht näher dargestellten Mitteln zum Empfangen dieser Signalisierungsinformation sowie mit Mitteln zur akustischen und/oder optischen Signalisierung des eingehenden Anrufs an den gerufenen Endteilnehmer und/oder mit Mitteln zum Aktivieren einer Mailbox und/oder mit Mitteln zum Einschalten bzw. Einloggen des angerufenen IP-Endgeräts 5 ausgestattet, falls dieses aktuell ausgeschaltet bzw. ausgeloggt sein sollte.

Die Signalisierungseinrichtung 6 kann in Form einer Zusatzelektronik vorgesehen sein, die als separates Kästchen an ein als Telefon-PC ausgerüstetes IP-Endgerät 5, beispielsweise ein Laptop oder Palmtop angeschlossen, oder in ihn eingebaut werden kann, wobei diese Zusatzelektronik vorzugsweise separat (z.B. von einer ladbaren Batterie aus dem PC oder vom 230V-Netz oder vom Telefonnetz bzw. vom ISDN-NT) gespeist wird. Diese Zusatzelektronik enthält einen Telefonrufsensor, eine akustisch-optische Signaleinrichtung und eine vom PC voreinstellbare Steuerung.

Wird bei ausgeschaltem PC von der Sensoreinrichtung ein Telefonruf aus dem Internet 4 registriert, so wird die akustisch-optische Signaleinrichtung 6 für die Dauer des anstehenden Rufes aktiviert, so dass sie akustische und/oder optische Rufsignale aussendet. Je nach Programmierung der Steuerung wird entweder der PC automatisch eingeschaltet oder es wird gewartet bis der Teilnehmer kommt und den PC per Knopfdruck zum Einschalten freigibt. Falls der Teilnehmer abwesend ist, wird eine Mailbox im PC oder eine Mailbox im Netz aktiviert - je nach Voreinstellung durch den Teilnehmer.

Damit ein Internet-Teilnehmer bei ausgeschaltetem PC oder Laptop einen Telefon- oder Faxruf empfangen kann, muss sichergestellt werden, dass der Teilnehmer einen Ruf erhalten kann, obwohl sein PC ausgeschaltet ist.

Dazu erhält der zum Teilnehmer zugeordnete Router bzw. Netz-Server 7 eine spezielle Steuerung oder eine spezielle Steuersoftware, die den Telefon- bzw. Faxruf aus dem Internet 4 erkennt und diesen an den IP-Teilnehmere weiterleitet, obwohl dieser z.Zt. nicht im Server eingeloggt ist, da sein PC 5 ausgeschaltet ist.

Die Übermittlung dieses Telefonrufs kann auch vom Server 7 und der ggf. zugehörigen ISDN-Telefonvermittlung über den D-Kanal des ISDN-Teilnehmeranschlusses den Teilnehmergeräten, z.B. den ISDN-Telefonen und/oder der PC-Zusatzelektronik signalisiert werden. Die Zusatzelektronik kann entsprechend den weiteren Ablauf zur Behandlung des Anrufs steuern.

## Patentansprüche

1. Verfahren zum Übermitteln von Signalisierungsinformation über ein IP (=Internet Protocol)-Netzwerk (4) an einen Endteilnehmer, mittels derer der Endteilnehmer darüber informiert werden kann, dass über das IP-Netzwerk (4) ein Anruf eingeht, der an ein am IP-Netzwerk (4) angeschlossenes IP-Endgerät (5) des Endteilnehmers gerichtet ist, und der insbesondere Video- und/oder Audiosignale, beispielsweise menschliche Sprachsignale übertragen soll,
**dadurch gekennzeichnet,**
**dass** die Rufsignalisierung unabhängig vom Internet Protocol über einen speziellen logischen Übertragungskanal auf einer parallelen oder derselben physischen Verbindungsleitung erfolgt, über welche der Anruf an das IP-Endgerät (5) weitergeleitet wird.

2. Verfahren nach Anspruch 1, **dadurch gekennzeichnet, dass** als logischer Übertragungskanal für die Rufsignalisierung ein D-Kanal einer ISDN-Verbindung benutzt wird.

3. Verfahren nach Anspruch 1 oder 2, **dadurch gekennzeichnet, dass** die Rufsignalisierung durch Senden einer bestimmten Frequenz erfolgt, mit der eine Signalisierungseinrichtung (6) am angerufenen IP-Endgerät (5) aktiviert werden kann.

4. Verfahren nach einem der vorhergehenden Ansprüche, **dadurch gekennzeichnet, dass** nach dem Eingehen der Rufsignalisierung automatisch akustische und/oder optische Signale an den gerufenen Endteilnehmer ausgesendet werden.

5. Verfahren nach einem der vorhergehenden Ansprüche, **dadurch gekennzeichnet, dass** nach dem Eingehen der Rufsignalisierung automatisch das IP-Endgerät (5) des gerufenen Endteilnehmers eingeschaltet und/oder eingeloggt wird.

6. Verfahren nach einem der vorhergehenden Ansprüche, **dadurch gekennzeichnet, dass** nach dem Eingehen der Rufsignalisierung automatisch der anrufende Endteilnehmer darüber informiert wird, wenn das angerufene IP-Endgerät (5) aktuell ausgeloggt ist, aber gegebenenfalls in Kürze eingeloggt werden wird.

7. Verfahren nach einem der vorhergehenden Ansprüche, **dadurch gekennzeichnet, dass** nach dem Eingehen der Rufsignalisierung automatisch eine lokale Mailbox am angerufenen IP-Endgerät (5) und/oder eine an das IP-Netzwerk (4) angeschlossene Mailbox aktiviert wird, wenn das angerufene IP-Endgerät (5) aktuell ausgeloggt oder nicht eingeschaltet ist.

8. Verfahren nach Anspruch 7, **dadurch gekennzeichnet, dass** die Mailbox erst nach Ablauf einer, vorzugsweise durch den gerufenen Endteilnehmer vorgebbaren Zeitspanne aktiviert wird.

9. Verfahren nach einem der Ansprüche 5 bis 8, **dadurch gekennzeichnet, dass** der gerufene Endteilnehmer vorgeben kann, ob im Falle eines an sein IP-Endgerät (5) gerichteten eingehenden Anrufs das IP-Endgerät (5) eingeschaltet und/oder eingeloggt wird, falls es aktuell ausgeschaltet oder ausgeloggt ist, oder ob in diesem Fall eine Mailbox aktiviert werden soll.

10. Verfahren nach einem der vorhergehenden Ansprüche, **dadurch gekennzeichnet, dass** ein Server (7), der insbesondere entweder an das IP-Netzwerk (4) des angerufenen IP-Endgeräts (5) oder an das Telekommunikations-Netzwerk (2) des anrufenden Endteilnehmers angeschlossen ist, den eingehenden Anruf detektiert und die Rufsignalisierung für den an das IP-Endgerät (5) gerichteten Anruf unabhängig davon initiiert, ob das angerufene IP-Endgerät (5) eingeschaltet bzw. eingeloggt ist.

11. Servereinheit zur Unterstützung des Verfahrens nach Anspruch 10, insbesondere Netzwerk-Server (7), mit Mitteln zum Detektieren eines Video- und/oder Audiosignale enthaltenden und an ein IP-Endgerät (5) gerichteten Anrufs sowie mit Mitteln zum Initiieren und Aussenden von Signalisierungsinformation an das angerufene IP-Endgerät (5).

12. Signalisierungseinrichtung (6) zur Unterstützung des Verfahrens nach einem der Ansprüche 1 bis 10 mit Mitteln zum Empfangen von Signalisierungsinformation, die anzeigt, dass ein Anruf, insbesondere mit Video- und/oder Audiosignalen, beispielsweise menschlichen Sprachsignalen, über ein IP-Netzwerk (4) eingeht, der an ein am IP-Netzwerk (4) angeschlossenes IP-Endgerät (5) eines gerufenen Endteilnehmers gerichtet ist, sowie mit Mitteln zur akustischen und/oder optischen Signalisierung des eingehenden Anrufs an den gerufenen Endteilnehmer und/oder mit Mitteln zum Aktivieren einer Mailbox und/oder mit Mitteln zum Einschalten bzw. Einloggen des angerufenen IP-Endgeräts (5), falls dieses aktuell ausgeschaltet bzw. ausgeloggt ist.

13. Signalisierungseinrichtung nach Anspruch 12, **dadurch gekennzeichnet, dass** die Signalisierungseinrichtung (6) eine vom IP-Endgerät (5) unabhängige, separate Energieversorgung aufweist.

14. Signalisierungseinrichtung nach Anspruch 13, **dadurch gekennzeichnet, dass** die Energieversorgung der Signalisierungseinrichtung (6) eine oder mehrere, vorzugsweise wiederaufladbare Batterien umfasst.

15. Signalisierungseinrichtung nach Anspruch 13 oder 14, **dadurch gekennzeichnet, dass** die Energieversorgung der Signalisierungseinrichtung (6) einen Stromversorgungsanschluss an ein Hochspannungsnetz, beispielsweise das 230V-Versorgungsnetz oder an ein Niederspannungsnetz, beispielsweise an ein Telekommunikationsnetzwerk, insbesondere an ein Telefonnetz, an ein ISDN-NT oder vorzugsweise an das IP-Netzwerk (4) des angerufenen IP-Endgeräts (5) umfasst.

16. Prozessorbaugruppe, insbesondere digitaler Signalprozessor (=DSP) zur Unterstützung des Verfahrens nach einem der Ansprüche 1 bis 10.

17. Programmierbare Gate-Array-Baugruppe zur Unterstützung des Verfahrens nach einem der Ansprüche 1 bis 10.

18. Computerprogramm zur Durchführung des Verfahrens nach einem der Ansprüche 1 bis 10.
